(19) **Europäisches Patentamt / European Patent Office / Office européen des brevets**

(11) **EP 1 765 608 B1**

(12) # EUROPÄISCHE PATENTSCHRIFT

(45) Veröffentlichungstag und Bekanntmachung des Hinweises auf die Patenterteilung:
**10.05.2017 Patentblatt 2017/19**

(21) Anmeldenummer: **05789321.6**

(22) Anmeldetag: **06.07.2005**

(51) Int Cl.:
**B60C 23/06** [(2006.01)]

(86) Internationale Anmeldenummer:
**PCT/EP2005/053231**

(87) Internationale Veröffentlichungsnummer:
**WO 2006/005710 (19.01.2006 Gazette 2006/03)**

(54) **VERFAHREN ZUR ERKENNUNG EINES DRUCKVERLUSTS IN KRAFTFAHRZEUGREIFEN**

METHOD FOR RECOGNITION OF A PRESSURE LOSS IN MOTOR VEHICLE TYRES

PROCEDE POUR IDENTIFIER UNE PERTE DE PRESSION DANS DES PNEUS DE VEHICULE AUTOMOBILE

(84) Benannte Vertragsstaaten:
**DE FR**

(30) Priorität: **09.07.2004 DE 102004033685**
**04.07.2005 DE 102005031485**

(43) Veröffentlichungstag der Anmeldung:
**28.03.2007 Patentblatt 2007/13**

(73) Patentinhaber:
- **Continental Teves AG & Co. oHG**
  **60488 Frankfurt am Main (DE)**
- **Continental AG**
  **30165 Hannover (DE)**

(72) Erfinder:
- **KÖBE, Andreas**
  **64625 Bensheim (DE)**
- **EDLING, Frank**
  **Yokohama City,**
  **Kanagawa 221-0052 (JP)**
- **GRIESSER, Martin**
  **65760 Eschborn (DE)**
- **KOUKES, Vladimir**
  **64297 Darmstadt (DE)**
- **CUNZ, Jörg**
  **63599 Biebergemünd (DE)**
- **IRTH, Markus**
  **55252 Mainz-Kastel (DE)**
- **GOOTJES, Lennert**
  **30451 Hannover (DE)**
- **HOFMANN, Maik**
  **31848 Bad Münde (DE)**
- **BLANK, Franko**
  **29693 Hodenhang (DE)**
- **DUCHOW, Alfred**
  **31249 Hohenhameln (DE)**
- **SCHREINER, Frank**
  **61381 Friedrichsdorf (DE)**

(56) Entgegenhaltungen:
EP-A- 0 787 606     DE-A1- 10 157 885
DE-A1- 10 303 492     US-A- 5 252 946

**Beschreibung**

Die Erfindung betrifft ein Verfahren zur Erkennung eines Druckverlusts in Kraftfahrzeugreifen gemäß Oberbegriff von Anspruch 1 sowie ein Computerprogramm gemäß Anspruch 8.

In modernen Fahrzeugen werden zur Verbesserung der Sicherheit vermehrt Reifendrucküberwachungssysteme eingesetzt. Aus der DE 100 58 140 A1 ist beispielsweise ein sogenanntes indirekt messendes Reifendrucküberwachungssystem (DDS) bekannt, welches aus Drehzahlinformationen (Raddrehzahl, Winkelgeschwindigkeit, Frequenz, etc.) der Fahrzeugräder den Reifenluftdruck bestimmt.

Aus der DE10303492 A1 ist ein Verfahren zur Erkennung eines Druckverlustes gemäß dem Oberbegriff des Anspruch 1 bekannt.

Nachteilig an dem bekannten indirekt messenden Reifendrucküberwachungssystem ist, dass nur ein Druckverlust an einem Reifen sicher erkannt werden kann.

Daher ist es die Aufgabe der Erfindung, ein Verfahren zur Erkennung eines Druckverlusts in Kraftfahrzeugreifen bereitzustellen, welches das bekannte Reifendrucküberwachungssystem (DDS) dahingehend verbessern, dass auch ein Druckverlust an mehr als an einem Reifen erkannt wird.

Diese Aufgabe wird erfindungsgemäß durch das Verfahren nach Anspruch 1 gelöst.

Bevorzugt werden die Kenngrößen (DIAG, SIDE, AXLE), welche aus den Abrollumfängen der Reifen berechnet werden, in Abhängigkeit von der Fahrzeuggeschwindigkeit und/oder dem Radmoment berechnet bzw. eingelernt.

Vorzugsweise werden aktuell berechnete Kenngrößen mit eingelernten Werten der Kenngrößen, welche einen Reifen ohne Druckverlust beschreiben, verglichen. Dieser Vergleich erfolgt besonders bevorzugt in Abhängigkeit der Fahrzeuggeschwindigkeit und/oder dem Radmoment.

Eine Warnung hinsichtlich eines Druckverlusts wird bevorzugt dann gegeben, wenn eine Abweichung ($\Delta$DIAG bzw. $\Delta$ SIDE bzw. $\Delta$AXLE) zwischen der berechneten Kenngröße (DIAG bzw. SIDE bzw. AXLE) und dem eingelernten Wert der Kenngröße eine festgelegte Schwelle überschreitet.

Weiterhin ist es bevorzugt, die absolute Fahrzeuggeschwindigkeit aus straßenbedingten Störungen, welche sich in einem zeitlichen Abstand auf die Raddrehzahlsignale der Vorder-und Hinterräder auswirken, und dem bekannten Achsabstand des Fahrzeugs zu bestimmen. Besonders bevorzugt wird aus der absoluten Fahrzeuggeschwindigkeit und den einzelnen Raddrehgeschwindigkeiten der absolute Abrollumfang jedes Reifens während der Fahrt bestimmt. Erfindungsgemäß wird zur Erkennung eines Druckverlusts an allen vier Radpositionen die Steigung der Kenngröße AXLE über dem Radmoment M bei einer konstanten Fahrzeuggeschwindigkeit (v = const.) dahingehend ausgewertet, ob eine Veränderung der Steigung ($\Delta$ Steigung) eine Schwelle überschreitet.

Weitere bevorzugte Ausführungsformen ergeben sich aus den Unteransprüchen.

Es zeigen

Fig. 1    die Kenngröße AXLE aufgetragen über dem Radmoment M,
Fig. 2    die Kenngröße AXLE aufgetragen über dem Radmoment M bei einem Druckverlust am Rad, und
Fig. 3    die Kenngröße AXLE aufgetragen über dem Radmoment M bei einem Druckverlust an allen Rädern.

Das erfindungsgemäße Verfahren erweitert und verbessert das bekannte indirekte Reifendrucküberwachungssystem (DDS) dahingehend, dass nun auch ein gleichzeitiger Druckverlust an mehreren Reifen erkannt wird. Eine Bewarnung dieser Druckverluste erfolgt auf Basis der bekannten DDS-Kenngrößen (DIAG, SIDE, AXLE), die den Abrollumfang des Reifens bewerten. Diese bekannten DDS-Kenngrößen repräsentieren die Raddrehzahlverhältnisse, die jeweils diagonalenweise (DIAG), seitenweise (SIDE) und achsweise (AXLE) berechnet werden. Alle diese Werte werden abhängig von der Fahrzeuggeschwindigkeit und dem Radmoment gelernt. Zur Druckwarnung erfolgt der Vergleich aktueller Werte von DIAG, SIDE und AXLE mit den gelernten Werten für die jeweilige Geschwindigkeit und das jeweilige Radmoment. Abweichungen oberhalb einer bestimmten Schwelle werden bewarnt.

Im herkömmlichen DDS stützt sich die Drucküberwachung nur allein auf die Kenngröße DIAG, das besonders robust gegenüber Störgrößen ist. Hierzu werden aktuelle Werte von DIAG mit den gelernten Werten für die jeweilige Geschwindigkeit und Radmoment verglichen. Die Kenngröße SIDE ist dagegen stärker abhängig von Kurvenfahrten, so dass hier eine Kompensation mit den gemessenen Gierraten oder Querbeschleunigungen angewendet wird. Die Kenngröße AXLE ist dagegen stärker abhängig von der Antriebs- und Reibwertsituation, was eine intensive Bewertung von AXLE abhängig vom Radmoment erfordert. SIDE und AXLE werden im herkömmlichen DDS, das auf eine schnelle Erkennung von Druckverlusten abzielt, deshalb nur zur sogenannten Raderkennung eingesetzt, bei der festgestellt werden soll, an welchem Reifen der Druckverlust vorliegt. Wiederum werden hierbei Abweichungen der aktuellen Werte von SIDE und AXLE zu den gelernten Werten bei derselben Geschwindigkeit und demselben Radmoment bewertet.

In dem vorliegenden erfindungsgemäßen Verfahren werden SIDE und AXLE nun auch herangezogen, um Druckverluste an mehr als einem Rad erkennen zu können. Die Erfindung stützt sich dabei auf die Annahme, dass Druckverluste an mehr als einem Rad in der Regel nur aufgrund von Diffusion auftreten und deshalb langfristig über mehrere Tage oder Wochen beobachtet und bewertet werden müssen und dürfen. Schnelle Druckverluste, z. B. aufgrund von Beschädigungen des Reifens, treten dagegen zumeist nur an einem Reifen auf und erfordern die bewährte schnelle Bewarnung wie sie bereits in dem bekannten indirekten Reifendrucküberwachungssystem durchgeführt wird.

Der wesentliche Unterschied zwischen dem erfindungsgemäßen Verfahren zur Reifendrucküberwachung und dem bekannten Reifendrucküberwachungssystem liegt darin, dass SIDE und AXLE nun sehr langfristig beobachtet werden, was eine robuste Unterscheidung der diffusionsbedingten Druckverluste an mehreren Reifen von kurzfristigen Veränderungen von SIDE und AXLE aufgrund von Kurvenfahrten oder Reibwertveränderungen ermöglicht.

Die Robustheit dieses Systems kann weiter erhöht werden, indem, insbesondere für den Fall eines Druckverlusts an allen vier Rädern gleichzeitig, zwei weitere Verfahren unterstützend eingesetzt werden:

In dem ersten Verfahren wird dabei der absolute Abrollumfang der Reifen ermittelt, so dass anders als beim bekannten Reifendrucküberwachungssystem auch absolute Abrollumfangsänderungen bewarnt werden können. Hierzu werden straßenbedingte Störungen im Raddrehzahlsignal ausgewertet, die sich an Vorder- und Hinterrädern zeigen. Aus dem zeitlichen Abstand des Auftretens dieser Störungen kann unter Berücksichtigung des bekannten Achsabstands auf die unbekannte Fahrzeugabsolutgeschwindigkeit geschlossen werden. Unter Verwendung der Absolutgeschwindigkeit und der einzelnen Raddrehgeschwindigkeiten kann nun der absolute Abrollumfang jedes Reifens während der Fahrt bestimmt werden.

In dem zweiten Verfahren werden die Raddrehzahlsignale hinsichtlich der Schwingungseigenschaften des Reifens ausgewertet. Da sich diese Schwingungseigenschaften mit dem Reifendruck verändern, ist eine Reifendrucküberwachung möglich.

Beide Teilverfahren benötigen Anregungen durch die Straße und können deshalb allein kaum ausreichend robust zur Drucküberwachung eingesetzt werden. Als optionale Ergänzung zu dem erfindungsgemäßen Verfahren können sie allerdings die Robustheit des Gesamtsystems erhöhen. Hierzu wird zumindest ein Verfahren (Bestimmung des absoluten Abrollumfangs oder Bestimmung der Schwingungseigenschaften) in Verbindung mit dem Verfahren zur Erkennung eines Druckverlusts kombiniert ausgewertet. Eine Warnung hinsichtlich eines Druckverlusts an mehr als an einem Rad wird nur dann ausgegeben, wenn beide verwendeten Verfahren jeweils einen Druckverlust erkennen, z. B. wenn jeweils eine Kenngröße jedes Verfahrens einen festgelegten Schwellwert überschreitet.

Gewählte Kriterien zur Erkennung von Druckverlusten an mehr als einem Rad:

1. Druckverlust an bis zu drei Positionen:

Für die Bewarnung von Druckverlusten an einer Position wird im bekannten Reifendrucküberwachungssystem die etablierte Kenngröße DIAG herangezogen. Darüber hinaus können die drei Kenngrößen DIAG, SIDE und AXLE gemeinsam ausgewertet werden, um zu bewerten, ob es sich um ein einzelnes schneller drehendes Rad und damit um einen Druckverlust handelt oder um ein einzelnes langsamer drehendes Rad (=Fehlwarnung).

Es ist darüber hinaus aber auch möglich, die drei Kenngrößen gemeinsam auszuwerten, um Druckverluste an einem, zwei oder drei Rädern erkennen zu können. Die neue Bedingung für einen Druckverlust lautet dann:

$$\mathrm{Max1}\{|\Delta \mathrm{DIAG}|,\ |\Delta \mathrm{SIDE}|,\ |\Delta \mathrm{AXLE}|\} \geq \mathrm{Schwelle} \qquad (1)$$

$$\mathrm{Max1}\{|\Delta \mathrm{DIAG}|,\ |\Delta \mathrm{SIDE}|,\ |\Delta \mathrm{AXLE}|\} + \mathrm{Max2}\{|\Delta \mathrm{DIAG}|,\ |\Delta \mathrm{SIDE}|,\ |\Delta \mathrm{AXLE}|\} \geq 2*\mathrm{Schwelle} \qquad (2)$$

wobei die Funktion MAX1 den größten Wert und die Funktion Max2 den zweitgrößten Wert aus der Wertemenge der Beträge der drei Kenngrößen liefert. Bedingungen (1) und (2) enthalten implizit den Sonderfall einer grundsätzlichen Warnung, wenn eine der Kenngrößen den Wert der zweifachen Schwelle überschreitet.

Üblicherweise wählt man als Schwelle für die Bewarnung einer DIAG Abweichung ($\Delta$ DIAG) eine Schwelle, die der mittleren Abrollumfangsänderung über alle möglichen Reifen für den gewünschten zu bewarnenden Druckverlust entspricht, z. B. 30%.

Die obigen Bedingungen berücksichtigen alle möglichen Druckverluste an einer, zwei oder drei Positionen, unabhängig davon, welche Positionen genau betroffen sind. Dabei wird davon ausgegangen, dass an den nicht betroffenen Reifen exakt noch der Luftdruck vorliegt, der beim Lernen vorlag.

Zur Erhöhung der Robustheit können grundsätzlich die bekannten Funktionen der DDS-Raderkennung angewendet werden, in denen auch die Vorzeichen von SIDE-, AXLE- und DIAG-Abweichung betrachtet werden.

2. Druckverlust an allen vier Positionen:

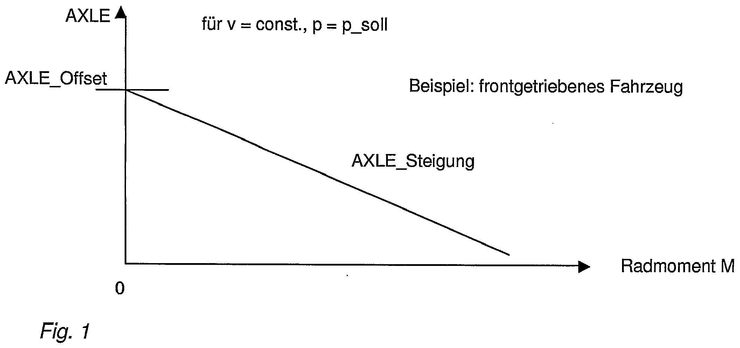

Für eine Erkennung von Druckverlusten an allen vier Positionen wird eine weitere Betrachtung vorgenommen, bei der nur die Kenngröße AXLE verwendet wird. Wie sich gezeigt hat, übt das Radmoment einen Einfluss auf den Radschlupf und damit auf die Drehgeschwindigkeit aus. Trägt man AXLE für eine Geschwindigkeit über dem Radmoment auf ergeben ergibt sich z. B. für frontgetriebene Fahrzeuge ein linearer Verlauf mit negativer Steigung (siehe Fig. 1). Dieser Verlauf wird gekennzeichnet über einen Offset beim Moment Null und über die Gradensteigung.

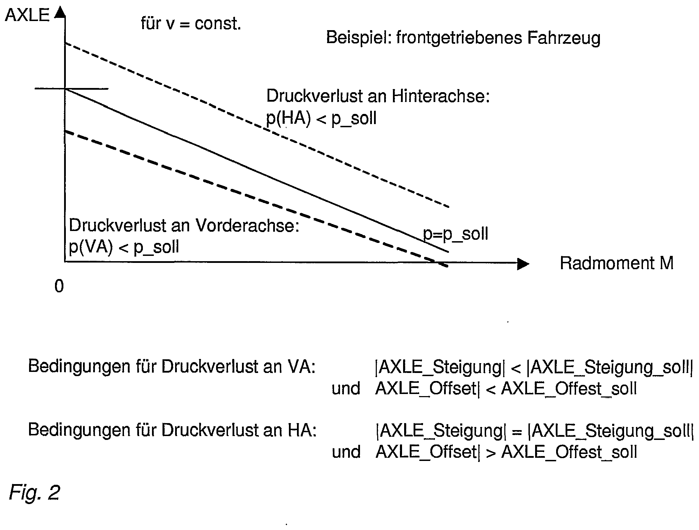

Tritt ein Druckverlust an einem oder zwei Rädern der freirollenden Hinterachse auf, so verschiebt sich diese Gerade parallel hin zu einem höheren Offset (Fig. 2). Tritt der Druckverlust an der angetriebenen Achse auf, so verschiebt sich einerseits der Offset hin zu kleineren Werten. Es ist jedoch auch eine Veränderung der Steigung der Geraden zu erkennen, wobei der Betrag der Steigung abnimmt. Dies ist damit zu erklären, dass die Auswirkung eines Druckverlusts auf den Abrollumfang geringer ausfällt, je größer das Radmoment ist. Eine Druckverlusterkennung anhand der Bedingungen für Druckverluste an bis zu drei Positionen gelingt deshalb besonders gut für den Fall des Freirollens, der z. B. näherungsweise zu Zeitpunkten vorliegt, an denen der Fahrer den Fuß vom Gas nimmt.

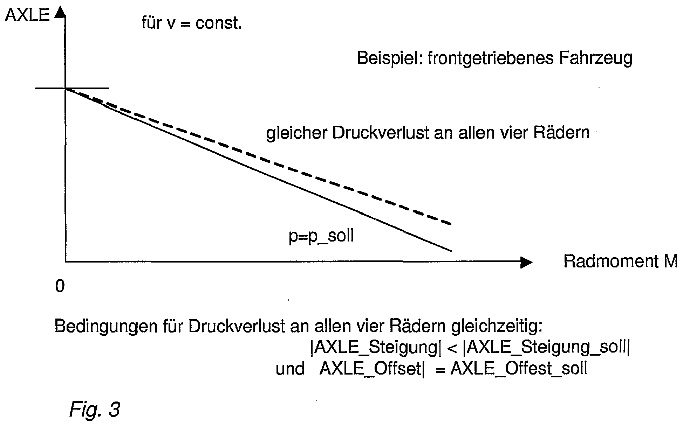

Dieses Verhalten einer veränderten Steigung von AXLE bei allen Druckverlusten, bei denen auch die Antriebsachse beteiligt ist, nutzt man nun auch für die Erkennung von Druckverlusten an allen vier Radpositionen. Liegen in etwa gleich große Druckverluste an allen Positionen vor, so sieht man keine Veränderung des Offsets, allerdings aber eine Veränderung der Steigung von AXLE über dem Radmoment (Fig. 3). Die Bedingung für einen Druckverlust an allen vier Positionen lautet deshalb:

$$\Delta \mathtt{Offset} = 0 \qquad\qquad (3)$$

und

$$|\Delta \mathtt{Steigung}| \geq \mathtt{Schwelle} \quad (4)$$

Eine Lastveränderung wirkt sich ebenfalls auf AXLE aus. So wird durch eine Zuladung der dynamische Abrollumfang an den Reifen der beladenen Achse verringert. Im betrachteten Fall des frontgetriebenen Fahrzeugs, dass eine Zuladung an der Hinterachse zulässt, bewirkt dies ebenso eine Veränderung des Offsets, wie ein Druckverlust an der Hinterachse. Die Schwellen für eine Druckverlusterkennung unter 1. müssen deshalb so gewählt werden, dass es nicht zu einer lastbedingten Fehlwarnung kommt. Für die Erkennung von Druckverlusten an vier Positionen kann man in einem solchen Fall auf die Überwachung von Bedingung (3) verzichten, denn bereits die Veränderung der Steigung allein erlaubt eine ausreichend genaue Erkennung.

Hierbei ist anzumerken, dass die Bewarnung einer veränderten Steigung eine sehr genaue und langfristige Überwachung erfordert, da sich die Steigung auch kurzfristig abhängig von den Straßen- und Reibwertbedingungen ändern kann. Da wie oben beschrieben ein gleichmäßiger Druckverlust an allen vier Rädern üblicherweise nur durch langfristige Diffusion zu erwarten ist, steht in der Regel eine ausreichende Beobachtungszeit zur Verfügung, so dass eine robuste Bewarnung erreicht werden kann. Stärkere, unterschiedliche Diffusion durch einzelne schlechte Reifen- oder Felgen bzw. schlechte Montage führen zu einem höheren Druckverlust an dem/n betroffenen Reifen und können nach Verfahren 1. auch kurzfristiger bewarnt werden.

Zur weiteren Erhöhung der Robustheit können darüber hinaus auch die beiden alternativen Verfahren zur Bestätigung eines erkannten Druckverlusts auf allen Positionen herangezogen werden.

**Patentansprüche**

**1.** Verfahren zur Erkennung eines Druckverlusts in Kraftfahrzeugreifen, welches insbesondere in einem indirekt messenden Reifendrucküberwachungssystem (DDS), welches einen Druckverlust an einem Fahrzeugrad aufgrund von einer Änderung des Abrollumfangs der Reifen erkennt, eingesetzt wird, wobei mindestens zwei verschiedene Kenngrößen, welche auf unterschiedliche Art und Weise aus den Abrollumfängen der Reifen berechnet werden, zur Erkennung eines Druckverlustes an mindestens einem Fahrzeugreifen ausgewertet werden, wobei als Kenngrößen die achsweise (AXLE) berechneten Änderungen der Abrollumfänge der Reifen sowie die diagonalenweise (DIAG) und/oder seitenweise (SIDE) berechneten Änderungen der Abrollumfänge der Reifen verwendet werden, wobei die Kenngrößen abhängig von dem Radmoment (M) berechnet werden, **dadurch gekennzeichnet, dass** zur Erkennung eines Druckverlusts an allen vier Radpositionen die Steigung der achsweise berechneten Kenngröße (AXLE) über dem Radmoment (M) bei einer konstanten Fahrzeuggeschwindigkeit (v) dahingehend ausgewertet wird, ob eine Veränderung der Steigung eine Schwelle überschreitet.

2. Verfahren nach Anspruch 1, **dadurch gekennzeichnet, dass** die Kenngrößen abhängig von der Fahrzeuggeschwindigkeit berechnet werden.

3. Verfahren nach Anspruch 1 oder 2, **dadurch gekennzeichnet, dass** die berechneten Kenngrößen mit gelernten Werten der Kenngrößen, welche einen Reifen ohne Druckverlust beschreiben, verglichen werden.

4. Verfahren nach Anspruch 3, **dadurch gekennzeichnet, dass** eine Warnung hinsichtlich eines Druckverlusts gegeben wird, wenn eine Abweichung der berechneten Kenngrößen von den gelernten Werten der Kenngrößen oberhalb einer festgelegten Schwelle liegt.

5. Verfahren nach mindestens einem der Ansprüche 1 bis 4, **dadurch gekennzeichnet, dass**

- die absolute Fahrzeuggeschwindigkeit aus straßenbedingten Störungen der Raddrehzahlsignale bestimmt wird,
- aus den jeweiligen Raddrehzahlsignalen der Reifen und der absoluten Fahrzeuggeschwindigkeit der absolute Abrollumfang jedes Reifens bestimmt wird, und
- eine Warnung hinsichtlich eines Druckverlusts ausgegeben wird, wenn die Kenngrößen, welche aus den Raddrehzahlsignalen berechnet werden, und eine Änderung der absoluten Abrollumfänge der Reifen einen Druckverlust erkennen.

6. Verfahren nach mindestens einem der Ansprüche 1 bis 5, **dadurch gekennzeichnet, dass**

- die Raddrehzahlsignale hinsichtlich der Schwingungseigenschaften der Reifen ausgewertet werden, und
- eine Warnung hinsichtlich eines Druckverlusts ausgegeben wird, wenn die Kenngrößen, welche aus den Raddrehzahlsignalen berechnet werden, und eine Änderung der Schwingungseigenschaften der Reifen einen Druckverlust erkennen.

7. Computerprogrammprodukt, **dadurch gekennzeichnet, dass** dieses einen Algorithmus definiert, welcher ein Verfahren gemäß mindestens einem der Ansprüche 1 bis 6 umfasst.

**Claims**

1. Method for detecting a pressure loss in motor vehicle tyres, which is used, in particular, in an indirectly measuring tyre-pressure monitoring system (DDS) which detects a pressure loss at a vehicle wheel on the basis of a change in rolling circumference of the tyres, wherein at least two different characteristic variables which are calculated from the rolling circumferences of the tyres in different ways are evaluated in order to detect a pressure loss in at least one vehicle tyre, wherein the changes in the rolling circumferences of the tyres which are calculated on an axial basis (AXLE) and the changes in the rolling circumferences of the tyres which are calculated on a diagonal basis (DIAG) and/or on a side basis (SIDE) are used as characteristic variables, wherein the characteristic variables are calculated as function of the wheel torque (M),
**characterized in that**, in order to detect a pressure loss at all four wheel positions, the gradient of the characteristic variable which is calculated on an axial basis (AXLE) plotted against the wheel torque (M) at a constant vehicle speed (v) is evaluated to determine whether a change in the gradient exceeds a threshold.

2. Method according to Claim 1, **characterized in that** the characteristic variables are calculated as a function of the vehicle speed.

3. Method according to Claim 1 or 2, **characterized in that** the calculated characteristic variables are compared with learnt values of the characteristic variables which describe a tyre without pressure loss.

4. Method according to Claim 3, **characterized in that** a warning relating to a pressure loss is given if a deviation of the calculated characteristic variables from the learnt values of the characteristic variables is above a defined threshold.

**5.** Method according to one of Claims 1 to 4,
**characterized in that**

- the absolute vehicle speed from road-conditioned interferences with the wheel rotational speed signals is determined,
- the absolute rolling circumference of each tyre is determined from the respective wheel rotational speed signals of the tyres and the absolute vehicle speed, and
- a warning relating to a pressure loss is output if the characteristic variables, which are calculated from the wheel rotational speed signals, and a change in the absolute rolling circumferences of the tyres detect a pressure loss.

**6.** Method according to one of Claims 1 to 5,
**characterized in that**

- the wheel rotational speed signals relating to the vibration properties of the tyres are evaluated, and
- a warning relating to a pressure loss is output if the characteristic variables, which are calculated from the wheel rotational speed signals, and a change in the vibration properties of the tyres detect a pressure loss.

**7.** Computer program product, **characterized in that** it defines an algorithm which comprises a method according to at least one of Claims 1 to 6.

## Revendications

**1.** Procédé pour détecter une perte de pression dans des pneus de véhicule automobile, ce procédé étant notamment utilisé dans un système de surveillance de pression de pneu (DDS) à mesure indirecte détectant une perte de pression au niveau d'une roue de véhicule sur la base d'une variation du périmètre de déroulement du pneu, au moins deux grandeurs caractéristiques différentes calculées de différente façon à partir des périmètres de déroulement des pneus étant analysées pour détecter une perte de pression au niveau d'au moins un pneu de véhicule, les grandeurs caractéristiques utilisées étant les variations calculées dans le sens de l'essieu (AXLE) des périmètres de déroulement des pneus ainsi que les variations calculées en diagonale (DIAG) et/ou en côté (SIDE) des périmètres de déroulement des pneus, les grandeurs caractéristiques étant calculées en fonction du couple de roue (M), **caractérisé en ce que** l'augmentation de la grandeur caractéristique (AXLE) calculée dans le sens de l'essieu est analysée quant à elle via le couple de roue (M) à vitesse du véhicule (v) constante pour détecter une perte de pression au niveau des quatre positions de roue, si une variation d'augmentation dépasse un certain seuil.

**2.** Procédé selon la revendication 1, **caractérisé en ce que** les grandeurs caractéristiques sont calculées en fonction de la vitesse du véhicule.

**3.** Procédé selon la revendication 1 ou 2, **caractérisé en ce que** les grandeurs caractéristiques calculées sont comparées aux valeurs acquises des grandeurs caractéristiques décrivant un pneu sans perte de pression.

**4.** Procédé selon la revendication 3, **caractérisé en ce qu'**un avertissement relatif à une perte de pression est envoyé lorsqu'un écart des grandeurs caractéristiques calculé par rapport aux valeurs acquises des grandeurs caractéristiques est supérieur à un seuil déterminé.

**5.** Procédé selon au moins l'une quelconque des revendications 1 à 4, **caractérisé en ce que** :

- la vitesse absolue du véhicule est définie à partir des dysfonctionnements liés à la qualité des routes envoyés par les signaux de vitesse de rotation de roue ;
- chaque pneu est défini à partir des signaux de vitesse de rotation de roue respectifs des pneus et de la vitesse absolue du véhicule du périmètre de déroulement absolu ; et
- un avertissement relatif à une perte de pression est envoyé lorsque les grandeurs caractéristiques calculées à partir des signaux de vitesse de rotation de roue et une variation des périmètres de déroulement absolus des pneus détectent une perte de pression.

**6.** Procédé selon au moins l'une quelconque des revendications 1 à 5, **caractérisé en ce que** :

- les signaux de vitesse de rotation de roue sont analysés par rapport aux propriétés d'oscillation des pneus ; et
- un avertissement relatif à une perte de pression est envoyé lorsque les grandeurs caractéristiques calculées à partir des signaux de vitesse de rotation de roue et une variation des propriétés d'oscillation des pneus détectent une perte de pression.

7. Produit de programme informatique, **caractérisé en ce que** celui-ci définit un algorithme comprenant un procédé selon au moins l'une quelconque des revendications 1 à 6.

EP 1 765 608 B1

AXLE

für v = const., p = p_soll

AXLE_Offset

Beispiel: frontgetriebenes Fahrzeug

AXLE_Steigung

Radmoment M

0

*Fig. 1*

AXLE ▲

für v = const.

Beispiel: frontgetriebenes Fahrzeug

Druckverlust an Hinterachse:
p(HA) < p_soll

Druckverlust an Vorderachse:
p(VA) < p_soll

p=p_soll

Radmoment M

0

Bedingungen für Druckverlust an VA:      |AXLE_Steigung| < |AXLE_Steigung_soll|
                                         und  AXLE_Offset| < AXLE_Offest_soll

Bedingungen für Druckverlust an HA:      |AXLE_Steigung| = |AXLE_Steigung_soll|
                                         und  AXLE_Offset| > AXLE_Offest_soll

*Fig. 2*

EP 1 765 608 B1

AXLE ▲          für v = const.

                        Beispiel: frontgetriebenes Fahrzeug

                        gleicher Druckverlust an allen vier Rädern

                    p=p_soll

                                        Radmoment M
0

Bedingungen für Druckverlust an allen vier Rädern gleichzeitig:
$|AXLE\_Steigung| < |AXLE\_Steigung\_soll|$
und $AXLE\_Offset| = AXLE\_Offest\_soll$

*Fig. 3*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10058140 A1
- DE 10303492 A1